# EUROPÄISCHE PATENTSCHRIFT

(11) **EP 2 989 896 B1**
(45) Veröffentlichungstag und Bekanntmachung des Hinweises auf die Patenterteilung: **27.02.2019**
(21) Anmeldenummer: 15176579.9
(22) Anmeldetag: 14.07.2015
(51) Int. Cl.: A21C 3/02, A21C 11/12

(54) **BACKWARE MIT MUSTER**
BAKERY PRODUCT WITH PATTERN
PRODUIT DE BOULANGERIE À MOTIF

(30) Priorität: 08.08.2014 DE 102014215808
(43) Veröffentlichungstag der Anmeldung: 02.03.2016
(73) Patentinhaber: Wolf ButterBack KG, 90763 Fürth (DE)
(72) Erfinder: Uhlmann, Erhard, 90592 Schwarzenbruck (DE); Schleicher, Katrin, 95194 Renitzlosau (DE)
(74) Vertreter: Taruttis, Stefan Georg

(56) Entgegenhaltungen:
- EP-A1- 0 561 702
- WO-A1-92/10101
- GB-A- 1 326 691
- JP-A- S55 108 250
- JP-A- S55 135 548
- US-A- 3 947 597
- US-A1- 2011 244 088

## Beschreibung

Die Erfindung beschreibt Backwaren mit einem Muster, insbesondere mit Plunderteig oder Blätterteig, bevorzugt gewickelte Backwaren, z.B. Croissants. Die Erfindung betrifft ein Verfahren zur Herstellung von Backwaren mit einem Muster und beschreibt eine Vorrichtung, die zur Herstellung solcher Backwaren eingerichtet ist.

Für die Zwecke der Erfindung sind ungebackene Teiglinge, optional vor oder nach einer Treibphase zum Gehenlassen eines Treibmittels, z.B. Hefe, gefrostet oder ungefrostet, sowie teilweise oder vollständig gebackene Teiglinge von Backwaren umfasst.

### Stand der Technik

Die DE 10 2008 000 763 A1 beschreibt ein Längs- und Querwalzsystem für ein Teigband, das zum kontinuierlichen Auswalzen drehbar gelagerte Walzen aufweist, deren Längsachsen im gleichen Radius um eine gemeinsame parallele Mittelachse angeordnet sind, um die die Walzen rotiert werden.

Die JP 55108250 A zeigt ein Verfahren zur Herstellung von Reiskuchen, bei dem ein erster Teig kontinuierlich ausgewalzt und mit einer Walze eingeschnitten wird. Auf diese erste eingeschnittene Teiglage wird ein zweiter Teig, der netzförmig ausgewalzt ist, aufgelegt.

Die GB 1 326 691 beschreibt nur die Herstellung eines gewalzten netzförmigen Teigs durch Einschneiden eines ausgewalzten Teigs quer zu dessen Laufrichtung mittels einer Schneidwalze mit anschließendem Strecken mittels eines schneller laufenden Förderbands. Die JP 55135548 A zeigt eine Vorrichtung zur Herstellung aufeinander liegender Teiglagen, von denen die untere Lage kontinuierlich ist, während die obere Lage durch Einschneiden eines ausgewalzten Teigs und Strecken zu einem Netz geformt wurde.

Die US 2011/0244088 beschreibt zur Herstellung gemusterter flacher Backwaren das Aufstreuen von pelletiertem Teig auf zuvor ausgewalzten Teig, der eine andere Farbe hat, mit anschließendem Einwalzen des aufgestreuten pelletierten Teigs in den zuvor ausgewalzten. Die EP 0 561 702 A1 beschreibt die Herstellung tournierten Teigs mit mindestens 50 Fettschichten aus Hefeteig und hefefreiem Teig für Croissants.

Die DE 197 20 689 A1 beschreibt ein Verfahren zum Ausschneiden von Teigstücken aus einer kontinuierlichen Teigbahn mittels umfänglich geschlossener Schneidkanten, die Teigstücke ausstanzen und nach dem Ausstanzen drehen können, wobei die Schneidkanten nach dem Ausstanzen von der Teigbahn weg bewegt werden, um das Teigstück von der Teigbahn zu entfernen und die Schneidkanten anschließend vom Teigstück weg und für ein erneutes Ausstanzen zur Teigbahn geführt werden.

Die DE 41 18 024 A1 beschreibt zur Herstellung von Blätter- oder Plunderteig das Tourieren eines Grundteigs, der für Plunderteig ein Treibmittel wie Hefe enthalten kann und optional kein Fett enthält, wobei der Grundteig mit einer Fettschicht versehen wird und diese gemeinsam mehrfach übereinander geschichtet bzw. auf ein kontinuierlich laufendes Band umgeschlagen werden. Dabei ergibt sich die Anzahl der übereinander liegenden Schichten aus Grundteig und Fett aus der Frequenz und Anzahl von Wiederholungen des Tourierens, mit der Schichten übereinander geschichtet werden, wobei die Dicke durch das Walzen eingestellt wird.

Die DE 691 19 239 T2 und die EP 0554762 A1 beschreiben Verfahren zur Herstellung von Gebäck, bei dem ein erster Teig hergestellt und auf eine erste Dicke ausgewalzt wird, ein zweiter Teig mit anderer Färbung hergestellt und auf eine zweite Dicke gewalzt wird, wobei die beiden Teigbahnen zwischen zwei Walzen zu einer längsgewellten Bahn laminiert werden. Die Wellung wird durch umlaufende Vertiefungen und Erhebungen der Walzen erzeugt, die etwas ineinander eingreifen.

### Aufgabe der Erfindung

Der Erfindung stellt sich die Aufgabe, ein alternatives Verfahren zur Herstellung von Backwaren bereitzustellen, die ein Muster aufweisen.

### Beschreibung der Erfindung

Die Erfindung löst die Aufgabe mit einem Verfahren mit den Merkmalen der Ansprüche zur Herstellung insbesondere mit einer Backware, die eine erste Teigschicht und unmittelbar angrenzend eine zweite Teigschicht aufweist oder daraus besteht, optional mit einer Füllung, an oder um die die erste und zweite
Teigschicht angeordnet sind. Die erste Teigschicht weist Ausnehmungen auf und eine zur zweiten Teigschicht unterschiedliche Färbung, wobei erste und zweite Teigschicht eine kontinuierliche, z.B. im Wesentlichen stufenfreie Oberfläche bilden, z.B. eine Oberfläche, die sich im Wesentlichen in einer gebogenen oder planen Ebene erstreckt. Die kontinuierliche Oberfläche zeichnet sich z.B. dadurch aus, dass am Übergang von erster und zweiter Teigschicht in der Oberfläche im Wesentlichen keine Stufe gebildet ist, insbesondere keine Stufe, die höher ist als die oberflächliche Unebenheit von einer der ersten und zweiten Schicht. Die kontinuierliche Oberfläche, die von der ersten und zweiten Teigschicht gebildet wird, kann in den Abschnitten, in denen die erste oder zweite Teigschicht die Oberfläche bilden, abhängig vom Treibmittel der Teigschicht unterschiedlich gewölbt sein. Die kontinuierliche Oberfläche ist insbesondere eine außenliegende Oberfläche der Backware.

Bevorzugt ist gegenüber der ersten Teigschicht auf der zweiten Teigschicht eine dritte Teigschicht angeordnet, die bevorzugt eine andere Färbung als die zweite Teigschicht aufweist. Optional sind zwischen zweiter und dritter Teigschicht Teigstücke des Teigverbunds angeordnet, die beim Beschneiden des Teigverbunds und/oder beim Ausschneiden von Teigstücken aus dem Teigverbund anfallen. Auf diese Weise können durch Verschnitt oder Abtrennen von Kantenbereichen erzeugte Teigstücke des Teigverbunds in der Backware enthalten sein.

Die erste und zweite Teigschicht bzw. erste, zweite und dritte Teigschicht bilden einen Teigverbund, bei dem bevorzugt zumindest die erste und zweite Teigschicht unmittelbar aufeinanderliegen und form- und kraftschlüssig miteinander verbunden sind. Die zweite und dritte Teigschicht sind bevorzugt direkt, optional mit zwischen diesen angeordneten Stücken des Teigverbunds, form- und kraftschlüssig miteinander verbunden.

Bevorzugt weist der Teigverbund aus erster und zweiter Teigschicht eine einheitliche Dicke auf; in Ausführungsformen mit einer dritten Teigschicht weist der Teigverbund aus erster, zweiter und dritter Teigschicht eine einheitliche Dicke auf. Die einheitliche Dicke kann dadurch erzeugt sein, dass die erste und zweite Teigschicht bzw. erste, zweite und dritte Teigschicht aufeinander angeordnet und gemeinsam auf eine Schichtdicke gepresst, z.B. ausgewalzt sind.

Optional, insbesondere in Ausführungsformen mit erster, zweiter und dritter Teigschicht kann der Verbund der Teigschichten an einer oder um eine ein- oder mehrteilige Füllung angeordnet sein, z.B. auf einer Füllung liegen oder um eine Füllung gewickelt sein. Die Backware ist bevorzugt ein Teigwickel mit oder aus einem Teigverbund aus erster und zweiter Teigschicht, optional mit einer gegenüber der ersten Teigschicht auf der zweiten Teigschicht angeordneten dritten Teigschicht, die insgesamt eine einheitliche Dicke aufweisen, insbesondere vor der Expansion eines Treibmittels. Bevorzugt ist die Backware aus einem dreieckigen Stück, das aus dem flächigen Teigverbund einheitlicher Dicke geschnitten, insbesondere gestanzt ist, gewickelt, optional gebogen.

Bevorzugt ist die Backware aus einem Stück des Teigverbunds gewickelt, z.B. ein Croissant. Durch die unterschiedliche Färbung von zweiter und dritter Teigschicht weist eine Backware, die z.B. einen gewickelten Teigverbund aufweist, an den zur Oberfläche in einem Winkel, insbesondere senkrecht angeordneten Kanten und im Querschnitt, z.B. durch Schneiden senkrecht zur Oberfläche, zumindest abschnittsweise zwei oder mehr Lagen des Teigverbunds übereinander auf, so dass die zweite und dritte Teigschicht im Querschnitt sichtbar sind. Die erste Teigschicht des Teigverbunds ist im Bereich ihrer Ausnehmungen im Querschnitt nicht sichtbar und kann bei geringer Dicke oder bei gleicher Färbung wie die dritte Teigschicht an der fertigen Backware unscheinbar bzw. nicht zu erkennen sein.

Die Färbung kann die Farbe der Teigschicht sein, die sich ohne Zusätze einstellt und im Wesentlichen durch Mehl, Fett und optional Zucker bestimmt wird, in der gebackenen Backware zusätzlich durch die thermische Bräunungsreaktion. Alternativ kann die Färbung durch einen Gehalt einer Teigschicht an Farbstoff bestimmt sein. Als Farbstoff kann natürlicher oder künstlicher Farbstoff oder ein färbendes Lebensmittel zugesetzt sein, z.B. Malzextrakt, ein Lebensmittelfarbstoff wie z.B. Karmin (E120), Zuckerkulör, bevorzugt Kakao.

So kann die zweite Teigschicht dunkel sein, z.B. Kakao enthalten, und die erste Teigschicht und die optionale dritte Teigschicht können hell sein, z.B. ohne Zusatz eines Farbstoffs, so dass der Teigverbund an der Oberfläche dunkle Abschnitte aus der zweiten Teigschicht aufweist, die von einem hellen Gitter aus der ersten Teigschicht umgeben sind. Wenn eine dritte helle Teigschicht im Teigverbund enthalten ist, weisen dessen Kanten die aufeinanderliegende dunkle zweite Teigschicht und angrenzend die helle dritte Teigschicht auf. In Ausführungsformen, in denen der Teigverbund gewickelt ist, liegt die Oberfläche abschnittsweise angrenzend an die dritte Teigschicht, so dass die dritte Teigschicht mit den Oberflächenabschnitten der ersten Teigschicht keinen farblichen Kontrast bildet und mit den Oberflächenabschnitten der zweiten Teigschicht einen farblichen Kontrast bildet. Alternativ kann die zweite Teigschicht hell sein, z.B. ohne zugesetzten Farbstoff, und die erste Teigschicht und die optionale dritte Teigschicht dunkel, z.B. mit einem Farbstoff versetzt sein, insbesondere Kakao.

Bevorzugt sind im Teigverbund die Dicken der ersten Teigschicht zur zweiten Teigschicht im Verhältnis 1:3 bis 1:8, insbesondere 1:5. In einem Teigverbund mit oder aus einer ersten, einer zweiten und einer dritten Teigschicht sind die Dicken der ersten Teigschicht zur zweiten Teigschicht zur dritten Teigschicht bevorzugt im Verhältnis 1:3:3 bis 1:8:8, insbesondere 1:5:5. Dabei sind die Dicken der Teigschichten voneinander unabhängig, so dass z.B. die erste Teigschicht eine Dicke im Verhältnis zur zweiten Teigschicht von 1:3 bis 1:8 unabhängig vom Verhältnis der Dicke der ersten Teigschicht zur dritten im Bereich von 1:3 bis 1:8 aufweisen kann.

Bevorzugt hat der Teigverbund vor dem Gehen des Treibmittels eine Gesamtdicke von zumindest 1,5mm, z.B. bis 10 mm, z.B. eine Gesamtdicke von 2 bis 8 mm oder bis 5 mm.

Das Verfahren zur Herstellung der Backwaren weist die folgenden Schritte auf:
1. Herstellen eines ersten Teigs für die erste Teigschicht, Herstellen eines zweiten Teigs für die zweite Teigschicht, Herstellen eines dritten Teigs für die dritte Teigschicht;
2. Auswalzen des ersten Teigs zu einer ersten Teiglage einer ersten Dicke und Erzeugen von beabstandeten, die erste Dicke zumindest anteilig überspannenden Einschnitten, z.B. längs, in einem Winkel von 30 bis 80° zur Walzrichtung, bevorzugt quer zur Walzrichtung, anschließendes Strecken des ersten Teigs, z.B. um 10 bis 90%, z.B. um 30 bis 60%, insbesondere in Förderrichtung eines Förderbands oder in Walzrichtung, bei quer zur Walzrichtung erzeugten Einschnitten insbesondere bis zur Dehnung oder Öffnung der Einschnitte auf 1 bis 20 mm, bevorzugt bis 15 mm oder bis 10 mm quer zu den Einschnitten, zur Herstellung einer ersten Teiglage, die gedehnte oder geöffnete Einschnitte aufweist;
3. Auswalzen des zweiten Teigs auf eine zweite Dicke zur Herstellung einer zweiten Teiglage;
4. Auswalzen des optionalen dritten Teigs auf eine dritte Dicke zur Herstellung einer dritten Teiglage;
5. Anordnen der ersten Teiglage angrenzend an die zweite Teiglage;
6. optional Anordnen der dritten Teiglage gegenüber der ersten Teiglage an die zweite Teiglage;
7. Auswalzen der Anordnung, die die erste und die angrenzende zweite Teiglage aufweist, wobei die Anordnung optional aus erster und zweiter oder aus erster, zweiter und dritter Teiglage besteht, zur Herstellung eines flächigen Teigverbunds einheitlicher Dicke mit oder aus erster und zweiter Teigschicht, optional aus erster, zweiter und dritter Teigschicht;
8. optional Abschneiden von Teigstücken entlang der Längskanten des Teigverbunds;
9. bevorzugt Ausschneiden von Stücken aus dem Teigverbund;
10. optional, vor oder nach Schritt 9, Aufbringen zumindest einer Füllung auf die der ersten Teiglage gegenüberliegende Oberfläche des Teigverbunds;
11. optional Wickeln von Stücken, die aus dem Teigverbund geschnitten sind;
12. optional vor dem Auswalzen der Anordnung von erster, zweiter und dritter Teiglage das Anordnen von Teigstücken des Teigverbunds zwischen der zweiten und optionalen dritten Teiglage.

Dabei können die Schritte 2 bis 4 in jeder anderen Reihenfolge ablaufen. Die Walzrichtung in Schritt 2 ist die Umlaufrichtung der Walze und ist gleich der Förderrichtung beim Strecken.

Die durch die Schritte hergestellten Backwaren können unmittelbar anschließend gefrostet werden, optional mit einer vorherigen Inkubation zum Gehenlassen des Treibmittels, und anschließend gebacken werden, oder direkt zum Gehenlassen inkubiert und gebacken werden. Die Inkubation kann z.B. bei 30°C bei 50% Luftfeuchtigkeit für 1 bis 5 h, bevorzugt 1 bis 2 h erfolgen.

Das Walzen des ersten Teigs kann auf eine erste Dicke im Bereich von 0,2 cm bis 0,8 cm oder bis 0,5 cm, bevorzugt bis 0,4 cm für die erste Teiglage erfolgen, das Walzen des zweiten Teigs kann auf eine zweite Dicke im Bereich von 0,6 cm bis 6 cm oder bis 5 cm, bevorzugt bis 4 cm, z.B. auf 2 cm für die zweite Teiglage erfolgen, das Walzen des optionalen dritten Teigs kann auf eine dritte Dicke im Bereich von 0,6 cm bis 6 cm oder bis 5 cm, bevorzugt bis 4 cm, z.B. auf 2 cm für die dritte Teiglage erfolgen.

Das Strecken des ersten Teigs kann z.B. mittels Übergangs des gewalzten und mit Einschnitten versehenen ersten Teigs von einem Transportband auf ein anschließendes, schneller laufendes Transportband erfolgen.

Die Einschnitte überspannen bzw. durchqueren den ersten Teig zumindest anteilig und können den ersten Teig z.B. zumindest zu 50% oder zumindest 80%, bevorzugt zu zumindest 90%, insbesondere vollständig durchqueren bzw. überspannen. Die Einschnitte können z.B. mittels einer umlaufenden Dekorwalze erzeugt werden, die überstehende Schneiden aufweist und deren Achse parallel zu einem Förderband und senkrecht zur Laufrichtung des Förderbands liegt. Dabei kann generell bei Einschnitten, die die Dicke der Teiglage nicht vollständig überspannen, das Strecken zur Dehnung der Einschnitte führen, insbesondere bis zu einer Öffnung der Einschnitte, z.B. wenn der am Einschnitt nicht geschnittene Anteil der Dicke der Teiglage beim Strecken reißt.

Die Einschnitte in der ersten Teiglage können sich z.B. über 50 bis 100% der Dicke der Teiglage erstrecken, wobei Einschnitte, die weniger als 100% der Dicke der Teiglage überspannen, beim Strecken der ersten bzw. zweiten Teiglage zur Dehnung der Einschnitte, optional zur Öffnung der Einschnitte führen.

Das Anordnen der ersten Teiglage angrenzend an die zweite Teiglage kann durch Anordnen der ersten Teiglage, die gedehnte bzw. geöffnete Einschnitte aufweist, auf einem Förderband mit anschließendem Auflegen der zweiten Teiglage erfolgen. Das optionale Anordnen der dritten Teiglage kann durch daran anschließendes Auflegen der dritten Teiglage auf die zweite Teiglage erfolgen. Alternativ kann optional die dritte Teiglage auf einem Förderband, anschließend auf die dritte Teiglage oder auf das Förderband die zweite Teiglage und darauf die erste Teiglage angeordnet werden.

Das Auswalzen der Anordnung aus erster und zweiter Teiglage, optional aus erster, zweiter und dritter Teiglage, kann ein- oder mehrstufig erfolgen, wahlweise durch Walzen in Laufrichtung eines Förderbands oder mit zusätzlichem Strecken quer zur Laufrichtung eines Förderbands.

Für das Auswalzen ist generell eine Walzeinrichtung bevorzugt, die eine drehbar gelagerte Anordnung von Walzen aufweist, deren Längsachsen im gleichen Radius um eine gemeinsame parallele Mittelachse angeordnet sind, z.B. wie in DE 10 2008 000 763 A1 beschrieben.

Wie mit Bezug auf die Backware beschrieben kann im Teigverbund die Dicke der ersten Teigschicht zur Dicke der zweiten Teigschicht im Verhältnis 1:3 bis 1:8 vorliegen, insbesondere 1:5. In einem Teigverbund mit oder aus einer ersten, einer zweiten und einer dritten Teigschicht sind die Dicke der ersten Teigschicht zur Dicke der zweiten Teigschicht zur Dicke der dritten Teigschicht bevorzugt im Verhältnis 1:3:3 bis 1:8:8, insbesondere 1:5:5, jeweils unabhängig voneinander.

Die erste Dicke, auf die der erste Teig ausgewalzt wird, die zweite Dicke auf die der zweite Teig ausgewalzt wird und die dritte Dicke auf die der dritte Teig ausgewalzt wird, stehen bevorzugt im gleichen Verhältnis zueinander, wie auch die jeweiligen Dicken der Teigschichten im Teigverbund.

Das Auswalzen der Anordnung aus erster und zweiter Teiglage, optional aus erster, zweiter und dritter Teiglage erfolgt bevorzugt auf eine Gesamtdicke von zumindest 1,5 mm, z.B. auf eine Gesamtdicke von 2 bis 10 oder bis 8 mm, bevorzugt auf 4 bis 6 mm, insbesondere 4 bis 5 mm.

Der zweite Teig und/oder der dritte Teig können treibmittelhaltige Teige sein, die homogen bzw. nicht touriert sind, z.B. nicht tourierte Hefeteige. Der zweite Teig und/oder der dritte Teig sind bevorzugt tourierte Teige aus mehrfach alternierenden Lagen eines Vorteigs, bevorzugt mit Hefe als Treibmittel, wobei der Vorteig fetthaltig oder fettfrei ist, und eines Fetts, das insbesondere Butter ist, z.B. Plunderteig bzw. Croissantteig, oder Blätterteig.

Der zweite und dritte Teig sind bevorzugt sog. tourierte bzw. gezogene treibmittelhaltige Teige, insbesondere Hefeteige, bevorzugt mit mindestens 30 Gew.-%, bezogen auf die Masse Mehl, Butter oder der entsprechenden Masse Milchfetterzeugnisse oder Margarine oder praktisch wasserfreier Fette, sowie Wasser, Hefe und Salz. Dabei ist das Mehl ein Getreidemahlerzeugnis, bevorzugt Weizenmehl, optional mit einem Gehalt an zugesetzter Stärke. Das Fett, entsprechend mindestens 30 Gew.-% Butter, kann anteilig im Vorteig sein oder vollständig als Lagen zwischen Lagen aus Vorteig eintouriert sein. Bevorzugt werden der zweite Teig und der optionale dritte Teig vor und/oder nach dem Auswalzen ruhen gelassen, z.B. bei 1 bis 10°C für 1 bis 12 h.

Die Teige können unabhängig voneinander kontinuierlich oder in Abschnitten aneinander angeordnet werden.

Bevorzugt wird der erste Teig zu einer Bahn ausgewalzt und anschließend mit Einschnitten versehen. Durch das anschließende Strecken der so hergestellten, mit Einschnitten versehenen ersten Teiglage werden die Einschnitte gedehnt, insbesondere geöffnet. Die angrenzend daran angeordnete zweite Teiglage wird beim anschließenden Auswalzen der Anordnung, die die erste und angrenzend die zweite Teiglage aufweist, in die Einschnitte gedrückt, wobei sich eine durchgehende bzw. kontinuierliche Oberfläche ausbildet, die von der zweiten Teiglage und der ersten Teiglage gebildet wird. Durch das Auswalzen der Anordnung wird diese gestreckt und entsprechend werden die Abschnitte vergrößert, in denen die erste Teiglage Ausnehmungen bzw. Öffnungen aufweist und die zweite Teiglage an der gemeinsamen Oberfläche liegt.

Generell bevorzugt ist die erste Teiglage auf einem Förderband angeordnet und darüber die zweite Teiglage, um auf einfache Weise gleichmäßig gedehnte bzw. geöffnete Einschnitte zu erzeugen. Dies hat zudem den Vorteil, dass beim Wickeln von ausgeschnittenen Teigstücken die auf dem Förderband aufliegende Unterseite des Teigverbundes, die dessen Oberfläche bildet, die Oberfläche die Außenfläche bildet, z.B. für Croissants.

Dabei ist bevorzugt, dass die Einschnitte quer zur Laufrichtung eines Förderbands und/oder quer zur Walzrichtung beim anschließenden Auswalzen der Anordnung der Teiglagen erzeugt werden, da durch die anschließenden Schritte ovale Abschnitte der zweiten Teigschicht in der gemeinsamen Oberfläche mit der ersten Teigschicht gebildet werden.

Die Einschnitte können z.B. mit einem Abstand von je 0,6 bis 2 cm, z.B. 1 cm Abstand in einer Linie liegen, z.B. jeder Einschnitt 1 bis 3 cm, insbesondere 2 cm lang, wobei die Linien parallel liegen, z.B. 0,5 bis 2 cm oder 1 bis 1,5 cm beabstandet sind. Bevorzugt sind die Einschnitte benachbarter Linien zueinander versetzt.

Der durch das Auswalzen hergestellte Teigverbund wird nach dem Auswalzen bevorzugt auf einem Förderband gefördert. Bevorzugt werden die längs verlaufenden Seitenkanten grade geschnitten, weiter bevorzugt werden die dabei abgeschnittenen Teigstücke rückgeführt und zwischen zweiter und dritter Teiglage angeordnet. Anschließend oder gleichzeitig kann optional der Teigverbund längs und/oder quer zur Förderrichtung geschnitten werden. Der Teigverbund kann so weiterverwendet werden, wahlweise gefrostet werden und z.B. als Halbprodukt eines Gebäckteils eingesetzt werden.

Generell bevorzugt werden aus dem ausgewalzten Teigverbund, der die Teigschichten umfasst oder daraus besteht, Stücke geschnitten, die insbesondere dreieckig sind und optional um 90° in der Ebene des Förderbands gedreht und nachfolgend gewickelt werden, insbesondere um eine Wickelachse, die senkrecht zur Laufrichtung des Förderbands liegt, um Croissants herzustellen. Denn es hat sich gezeigt, dass dadurch ovale bis runde Oberflächenabschnitte der zweiten Teiglage in der mit der ersten Teiglage gemeinsamen bzw. kontinuierlichen Oberfläche gebildet werden.

Zur Färbung weist einer von erstem und zweitem Teig, optional der dritte Teig, Farbstoff auf, insbesondere Kakao.

Bevorzugt ist der erste Teig ein homogener, treibmittelhaltiger Teig, d.h. ohne Lagen aus Fett, wobei das Treibmittel bevorzugt Hefe ist. Der erste Teig weist bevorzugt eine Konsistenz auf, die ein Teig der folgenden Zusammensetzung bei 1 bis 10°C nach Anmischen und Kneten ohne Ruhephase oder mit einer Ruhephase von 3 bis 6 h bei 1 bis 4 °C aufweist:
Bezogen auf 100 Gew.-% Weizenmehl Typ 550,
35 bis 43 Gew.-%, bevorzugt 40 Gew.-% Wasser,
10 bis 25 Gew.-%, bevorzugt 17,6 Gew.-% Butter,
3,2 bis 7 Gew.-%, bevorzugt 4 Gew.-% Hefe,
0,8 bis 3 Gew.-%, bevorzugt 1,6 Gew.-% Salz.

Der erste, zweite und dritte Teig können zusätzlich Quellmehle, Hydrokolloide oder Verdickungsmittel enthalten und eine entsprechende zusätzliche Masse Wasser zu deren Sättigung. Optional können diese Teige zusätzlich Zucker, Backhilfsmittel, Eipulver, z.B. Volleipulver und/oder Milchpulver, z.B. Vollmilchpulver enthalten.

Die für das Verfahren eingerichtete Vorrichtung ist für die Verfahrensschritte eingerichtet. Die Vorrichtung weist eine Schneideinrichtung auf, insbesondere eine Schneideinrichtung, die an einem ersten Förderband angeordnet ist, z.B. oberhalb eines Förderbands eine parallel rotierende Dekorwalze mit Messern, deren Achse senkrecht zur Laufrichtung des Förderbands liegt und deren Messer ausreichend vorstehen, bevorzugt bis an das Förderband, um den ausgewalzten ersten Teig über seine Dicke mit beabstandeten Einschnitten zu versehen, die diskontinuierlich sind. Entsprechend stehen die Messer z.B. zumindest um die Dicke des ausgewalzten ersten Teigs vor. Die Messer sind entsprechend der Einschnitte angeordnet, z.B. mit einem Abstand von je 0,6 bis 2 cm, z.B. 1 cm Abstand in einer Linie, z.B. jedes Messer mit einer Schneide einer Länge von 1 bis 3 cm, insbesondere 2 cm, wobei die Linien parallel liegen, z.B. 0,5 bis 2 cm oder 1 bis 1,5 cm beabstandet sind. Bevorzugt sind die Messer benachbarter Linien zueinander versetzt oder entlang des Radius der Dekorwalze deckungsgleich angeordnet. Zur Erzeugung der Einschnitte in der ersten Teiglage weist die Vorrichtung z.B. eine Schneideinrichtung auf, die eingerichtet ist, Einschnitte im ersten Teig zu erzeugen, die diesen zumindest anteilig, bevorzugt zumindest zu 50% oder zumindest 80%, bevorzugt zu zumindest 90%, insbesondere vollständig durchqueren bzw. überspannen. Dazu ist die Schneideinrichtung z.B. oberhalb eines ersten Förderbands in einem Abstand angeordnet, in dem die Messer bis in einen Abstand zum ersten Förderband ragen oder bis an das erste Förderband ragen. Der Abstand kann z.B. 50%, 20%, 10% der Dicke der ersten Teiglage betragen.

In Förderrichtung des ersten Förderbands, an dem die Schneideinrichtung angeordnet ist, ist eine Streckeinrichtung angeordnet, z.B. ein zweites Förderband mit gleicher Förderrichtung, das um den Faktor der gewünschten Streckung schneller angetrieben ist. Beim Verfahren liegt die gestreckte erste Teiglage, die geöffnete Einschnitte aufweist, auf dem zweiten Förderband.

Für das Anordnen der ersten Teiglage angrenzend an die zweite Teiglage kann das zweite Förderband oder ein weiteres anschließendes Förderband eine Länge aufweisen, die zum manuellen Anordnen der Teiglagen ausreicht. Bevorzugt wird die zweite Teiglage direkt auf der ersten Teiglage angeordnet. Bei der manuellen Anordnung ist bevorzugt, die zweite Teiglage in Abschnitten auf die erste Teiglage zu legen. Alternativ kann die erste Teiglage, die geöffnete Einschnitte aufweist, auf eine zweite Teiglage angeordnet werden, die vorzugsweise auf einem Förderband liegt und auf deren gegenüberliegender Unterseite optional eine dritte Teiglage angeordnet ist.

Bevorzugt weist die Vorrichtung eine Einrichtung zum Anordnen der ersten an die zweite Teiglage auf, die insbesondere eine Einrichtung zum Auflegen der zweiten Teiglage auf die erste Teiglage ist, die geöffnete Einschnitte aufweist, z.B. ein oberhalb der ersten Teiglage angeordnetes Förderband, das die zweite Teiglage kontinuierlich mit gleicher Geschwindigkeit aufbringt, mit der die erste Teiglage gefördert wird. Alternativ kann die Einrichtung zum Anordnen bzw. Auflegen der zweiten Teiglage ein Greifersystem sein, das eingerichtet ist, Abschnitte der zweiten Teiglage nacheinander auf das Förderband zu legen, das die erste Teiglage fördert. Alternativ kann die Vorrichtung eine Einrichtung zum Auflegen der ersten Teiglage auf die zweite Teiglage aufweisen, z.B. ein Förderband.

Weiter bevorzugt weist die Vorrichtung eine Einrichtung zum Anordnen der dritten Teiglage an die zweite Teiglage auf. Diese Einrichtung kann ein Förderband sein, das die ausgewalzte dritte Teiglage auf die zweite Teiglage legt, oder ein Greifersystem, das die dritte Teiglage, optional Abschnitte dieser, auf die zweite Teiglage legt.

In Förderrichtung anschließend an das Förderband, auf dem die erste Teiglage angrenzend an die zweite Teiglage angeordnet wird, optional mit einer Einrichtung zu Auflegen der zweiten Teiglage auf die erste Teiglage oder einer Einrichtung zum Auflegen der ersten Teiglage auf die zweite Teiglage, weist die Vorrichtung eine Walzeinrichtung zum Walzen der Anordnung auf, die die erste Teiglage und die zweite Teiglage umfasst. Die Walzeinrichtung kann ein- oder mehrstufig sein kann. Bevorzugt weist die Walzeinrichtung eine drehbar gelagerte Anordnung von Walzen aufweist, deren Längsachsen im gleichen Radius um eine gemeinsame parallele Mittelachse angeordnet sind. Eine solche Walzeinrichtung kann einstufig sein, um die Anordnung aus erster Teiglage, zweiter Teiglage, dritter Teiglage und zwischen zweiter und dritter Teiglage angeordneten rückgeführten Teigstücken zur gewünschten Dicke des Teigverbunds zu walzen.

Ein Förderband kann generell ein kontinuierliches Band oder ein aus miteinander verbundenen Elementen gebildetes Band sein.

Bevorzugt weist die Vorrichtung im Anschluß an die Walzeinrichtung eine Kantenschneideinrichtung auf, die die Kanten des Teigverbunds parallel zur Förderrichtung des Förderbands abschneidet. Weiter bevorzugt weist die Vorrichtung eine Transporteinrichtung zur Rückführung der Teigstücke, die als abgeschnittene Kanten des Teigverbunds anfallen, zu dem Bereich auf, in dem die zweite Teiglage auf der ersten Teiglage angeordnet ist und/oder zu dem Bereich, in oder nach dem die dritte Teiglage auf der zweiten Teiglage angeordnet wird.

Die Vorrichtung kann anschließend an die Einrichtung zum Auswalzen der Anordnung mit erster und zweiter Teiglage zum Teigverbund eine Einrichtung zum Längs- und/oder Querschneiden des Teigverbunds aufweisen. Bevorzugt weist die Vorrichtung eine Einrichtung zum Ausschneiden von Stücken aus dem Teigverbund auf, die eingerichtet ist, die ausgeschnittenen Stücke in der Ebene eines Förderbands um 90° zu drehen. Für die Herstellung von Croissants weist diese Einrichtung zum Ausschneiden von Stücken z.B. eine umlaufend geschlossene Schneidkante zum Ausstanzen von Stücken auf und ist eingerichtet, nach dem Ausstanzen die Schneidkante in einen Abstand von dem Förderband zu bewegen, der einen Kontakt mit dem Förderband vermeidet und ein formschlüssiges Umfassen der ausgestanzten Stücke erlaubt. Weiter bevorzugt weist die Vorrichtung eine Wickeleinrichtung auf, mit der die ausgestanzten Stücke um eine Achse parallel zum Förderband und senkrecht zur Förderrichtung gewickelt werden. Die gewickelten Stücke werden gehen gelassen, optional vor oder nach dem Gehenlassen gefrostet, und gebacken.

Die Erfindung wird nun genauer anhand von Beispielen und mit Bezug auf die Figuren beschrieben, die schematisch in
- Figur 1 ein Croissant als Beispiel für eine Backware,
- Figur 2 einen Querschnitt durch ein Croissant,
- Figur 3 eine Aufsicht auf eine Vorrichtung,
- Figur 4 eine Aufsicht auf eine Backware,
- Figur 5 eine Anordnung von Einschnitten bzw. von Messern,
- Figur 6 eine Einrichtung zur Herstellung einer Anordnung aus erster, zweiter und dritter Teiglage und
- Figur 7 eine Vorrichtung zur Herstellung mit einer Transporteinrichtung zur Rückführung abgeschnittener Kanten des Teigverbunds zeigen.

### Beispiel: Croissant

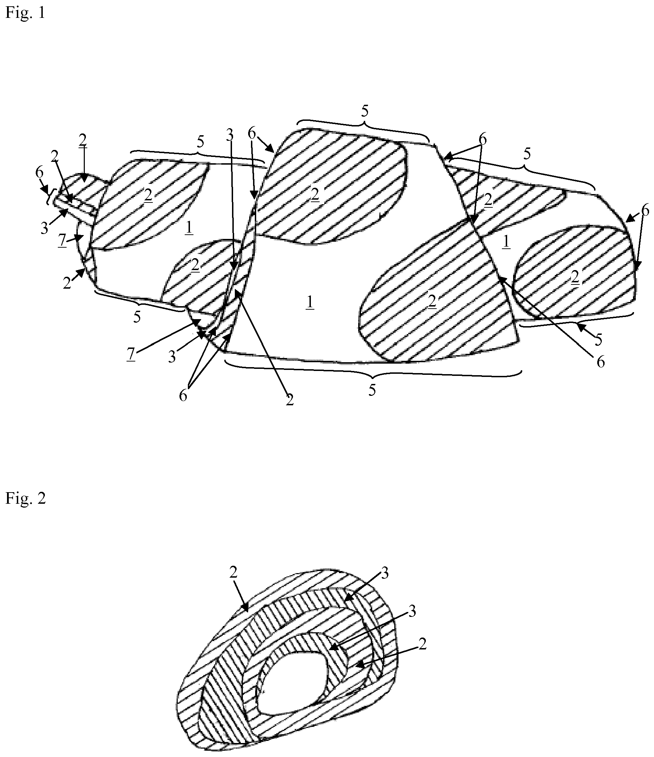

Als Beispiel für eine Backware wurde ein Croissant hergestellt. Dazu wurde ein Dreieck aus einem Teigverbund aus einer ersten Teigschicht 1, einer zweiten Teigschicht 2 und einer dritten Teigschicht 3 ausgeschnitten und in herkömmlicher Weise gewickelt, zum Gehenlassen des Treibmittels inkubiert und gebacken. Die erste Teigschicht 1 ist ein Hefeteig, die zweite und dritte Teigschicht 2, 3 sind Plunderteig bzw. Croissantteig. In diesem Beispiel ist nur die zweite Teigschicht 2 mit Kakao als Farbstoff gefärbt, die erste und zweite Teigschicht sind ohne zugesetzten Farbstoff und weisen daher als Färbung die normale Bräunung gebackenen Teigs auf Weizenmehlbasis auf. In Figur 1 sind Teigschichten, die Kakao als Farbstoff enthalten, schraffiert, Teigschichten ohne Kakao sind nicht schraffiert. Figur 1 zeigt das Croissant in Aufsicht mit der ersten Teigschicht 1, die aus hellem Hefeteig besteht, direkt angrenzend an die zweite Teigschicht 2, die durch einen Gehalt an Kakao gefärbt ist. Die erste Teigschicht 1 bildet einen Teil der Oberfläche des Croissants und weist Ausnehmungen auf, die von der zweiten Teigschicht 2 ausgefüllt sind und in denen die zweite Teigschicht 2 die Oberfläche bildet. In der Aufsicht wird an den Bereichen 5, in denen die Oberfläche etwa senkrecht zur Betrachtungsebene liegt, deutlich, dass die erste Teigschicht 1 und die zweite Teigschicht 2 eine kontinuierliche Oberfläche bilden, die im Wesentlichen keine Stufen aufweist.

Gegenüber der ersten Teigschicht 1 grenzt die dritte Teigschicht 3 an die zweite Teigschicht 2 an. Die dritte Teigschicht 3, die nicht gefärbt ist und von der ersten und zweiten Teigschicht 1, 2 überdeckt wird, ist nur an der Schnittkante 6 sichtbar. In Figur 1 am linken Ende ist auf Grund der Wicklung die Innenfläche 7 der dritten Teigschicht 3 sichtbar, die der zweiten Teigschicht gegenüber liegt.

Figur 2 zeigt einen Querschnitt durch ein Croissant, das ebenfalls aus einem Teigverbund aus einer ersten Teigschicht 1, einer zweiten Teigschicht 2 und einer dritten Teigschicht 3 gewickelt und gebacken wurde. Die zweite Teigschicht 2 und die unterschiedlich gefärbte dritte Teigschicht 3 zeigen zumindest in dem oberen Bereich, auf dem das Croissant nicht aufliegt, abwechselnd gefärbte Teigschichten 2, 3, die aufgrund der Wicklung zumindest abschnittsweise im Querschnitt ein Spiralmuster ergeben. Die erste Teigschicht 1 ist in diesem Querschnitt nicht sichtbar.

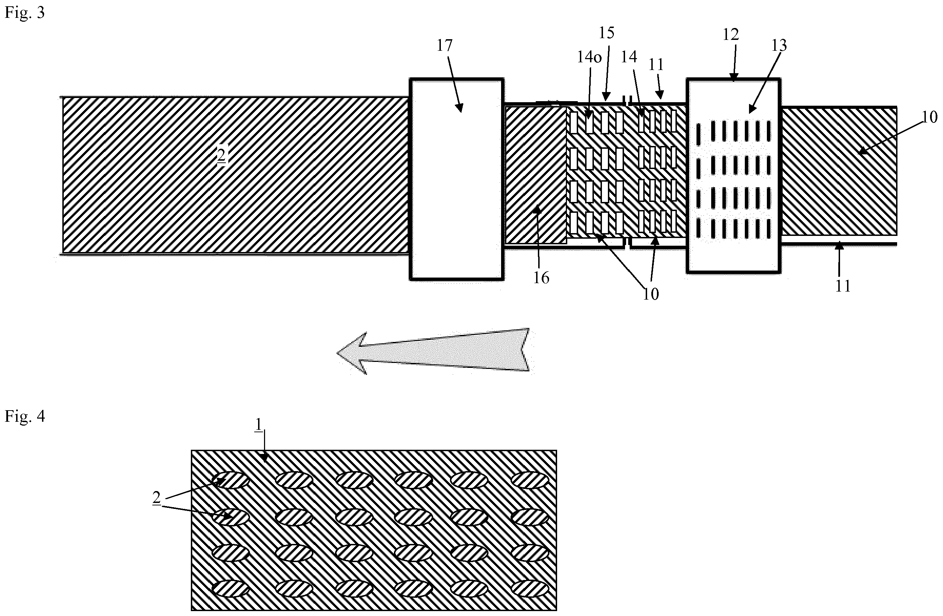

Das Verfahren zur Herstellung ist in Figur 3 dargestellt, wobei der Pfeil die Förderrichtung bzw. Abfolge der Schritte andeutet. Eine erste Teiglage 10, die aus einem Hefeteig aus 125 kg Weizenmehl Typ 550, 50 kg Wasser (40 Gew.-% bezogen auf Mehl), 22 kg Butter als Fett (17,6 Gew.-% bezogen auf Mehl), 5 kg Hefe (4 Gew.-% bezogen auf Mehl) und 2 kg Salz (1,6 Gew.-% bezogen auf Mehl) geknetet und auf eine erste Dicke ausgewalzt war, wurde auf einem ersten Förderband 11 aufgelegt und unterhalb einer Dekorwalze 12 gefördert, so dass das erste Förderband 11 und die Dekorwalze 12 die Schneideinrichtung bildeten. Die Dekorwalze 12 wies Messer 13 auf, die die erste Teiglage 10 vollständig senkrecht durchschnitten, um Einschnitte 14 zu erzeugen. Die erste Teiglage 10 mit Einschnitte 14 wurde durch Übergang auf ein zweites Förderband 15 gestreckt, so dass die Einschnitte 14 zu geöffneten Einschnitten 14o gestreckt wurden. Das zweite Förderband 15 war um den Faktor der Streckung schneller angetrieben. Auf die erste Teiglage 10 mit geöffneten Einschnitten 14o wurde anschließend ein zu einer zweiten Teiglage 16 ausgewalzter Plunderteig aufgelegt, der durch einen Gehalt an Kakao gefärbt war. Diese Anordnung wurde mittels einer Walzeinrichtung 17 ausgewalzt, um den Teigverbund aus der in Figur 3 untenliegenden ersten Teigschicht 1 und der daran angrenzenden zweiten Teigschicht 2 herzustellen.

Optional wurde nach Auflegen der zweiten Teiglage 16 vor dem Walzen mittels der Walzeinrichtung 17 eine dritte Teiglage (nicht dargestellt) aus Plunderteig ohne Farbstoff aufgelegt.

Figur 4 zeigt den mit dem in Figur 3 dargestellten Teigverbund um 180° gedreht, entsprechend in einer Aufsicht auf die in Figur 3 abgewandte Unterseite des Teigverbunds. Die Ausnehmungen in der ersten Teigschicht 1 sind von Teigschicht 2 ausgefüllt. Die erste und zweite Teigschicht 1, 2 bilden gemeinsam eine kontinuierliche Oberfläche, in der beide Teigschichten im Wesentlichen ohne Stufe aneinanderliegen.

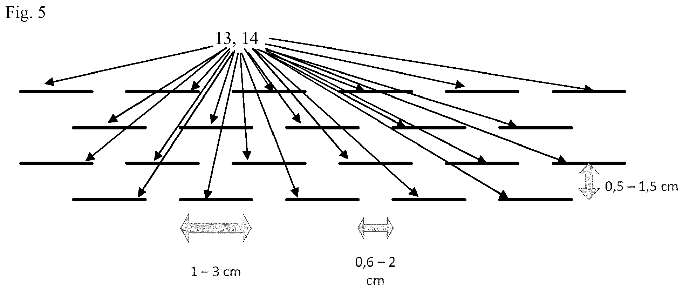

Figur 5 zeigt eine bevorzugte Anordnung von Messern 13 auf der Umfangsfläche einer Dekorwalze bzw. eine bevorzugte Anordnung von Einschnitten 14 in einer ersten Teiglage 10, die nach Auswalzen in Anordnung mit einer direkt angrenzenden zweiten Teiglage im Teigverbund Ausnehmungen in der ersten Teigschicht bilden, die in einer gemeinsamen planen Oberfläche von der zweiten Teigschicht ausgefüllt sind. Die Messer 13 bzw. die Einschnitte 14 sind bevorzugt zueinander versetzt angeordnet.

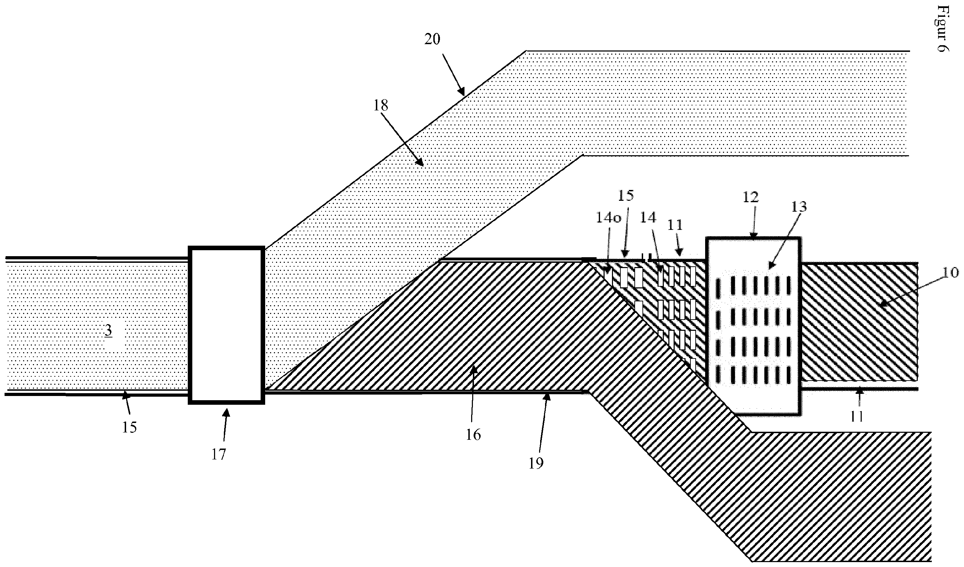

Figur 6 zeigt ein für das kontinuierliche Anordnen der ersten Teiglage 10, zweiten Teiglage 16 und dritten Teiglage 18 geeignetes Verfahren und eine dazu geeignete Vorrichtung. Die erste Teiglage 10 wird mittels eines ersten Förderbands 11 unter einer Dekorwalze 12 hindurchgefördert, die Einschnitte 14 in der ersten Teiglage 10 erzeugt, wobei die erste Teiglage 10 anschließend zur Dehnung oder Öffnung der Einschnitte 14 gestreckt wird, z.B. indem sie auf ein schneller laufendes zweites Förderband 15 übergeben wird. Die erste Teiglage 10 mit den gedehnten oder geöffneten Einschnitten 14 wird auf einem zweiten Förderband 15 transportiert. Generell kann jedes Förderband, insbesondere das zweite Förderband 15, aus aneinander angrenzenden Segmenten bestehen. Die zweite Teiglage 16 wird mittels eines dritten Förderbands 19 auf die auf dem zweiten Förderband 15 angeordnete erste Teiglage 10 gelegt. Anschließend wird die dritte Teiglage 18 mittels eines vierten Förderbands 20 auf die zweite Teiglage 16 aufgelegt, so dass die Anordnung aus erster Teiglage 10, die auf dem zweiten Förderband aufliegt, darauf der zweiten Teiglage 16 und auf dieser der dritten Teiglage 18 hergestellt wird. Diese Anordnung wird mittels der Walzeinrichtung 17 zum Teigverbund aus erster, zweiter und dritter Teigschicht 1, 2, 3 ausgewalzt.

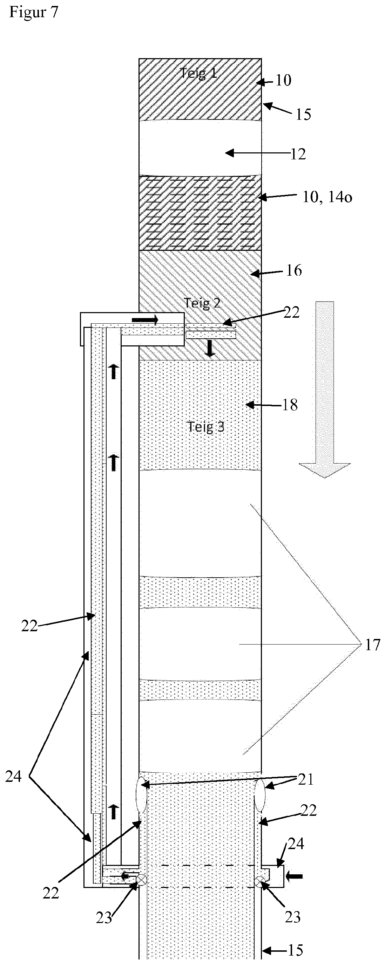

Figur 7 zeigt eine bevorzugte Vorrichtung zur Durchführung des Verfahrens mit einer Transporteinrichtung zur Rückführung abgeschnittener Kanten des Teigverbunds. Im Anschluß an die Walzeinrichtung 17, die optional zwei oder wie hier gezeigt drei aufeinander folgende Walzen aufweisen kann, sind an beiden Kantenbereichen des zweiten Förderbands 15 Kantenschneideinrichtungen 21 angeordnet, die den Teigverbund auf eine vorbestimmte Breite schneiden. Die abgetrennten Kantenbereiche werden als Teigstücke 22 des Teigverbunds von Leitelementen 23, die z.B. rotierende Bürsten sein können, vom zweiten Förderband 15 entfernt und mittels einer Transporteinrichtung 24 zur Rückführung, die z.B. ein Rückführband ist, zu dem Abschnitt des zweiten Förderbands 15 gefördert, in welchem nur die zweite Teiglage 16 auf der ersten Teiglage 10 liegt, bevor die dritte Teiglage 18 auf die zweite Teiglage 16 aufgelegt wird. Die Richtung der Rückführung der Teigstücke 22 ist durch die dicken Pfeile angezeigt.

Entsprechend weist eine bevorzugte Vorrichtung eine anschließend an die Walzeinrichtung 17 angeordnete Kantenschneideinrichtung 21 mit anschließender Transporteinrichtung 24 zur Rückführung abgetrennter Teigstücke 22 auf, wobei die Transporteinrichtung 24 bevorzugt bis zu dem Abschnitt des zweiten Förderbands 15 reicht, der zwischen dem Bereich liegt, in dem ein drittes Förderband 19 oberhalb des zweiten Förderbands 15 endet und dem Bereich, in dem ein viertes Förderband 20 oberhalb des zweiten Förderbands 15 endet.

Das Herstellen der Anordnung aus erster, zweiter und dritter Teiglage 10, 16, 18 mittels eines zweiten, dritten und vierten Förderbands, wie mit Bezug auf Figur 6 beschrieben, kann mit der Ausführung des Verfahrens kombiniert werden, bei der vom Teigverbund abgeschnittene Teigstücke auf der zweiten Teiglage (16) angeordnet werden, wie z.B. mit Bezug auf Figur 6 beschrieben ist.

**Bezugszeichenliste:**

| | |
|---|---|
| 1 erste Teigschicht | 14o geöffneter Einschnitt |
| 2 zweite Teigschicht | 15 zweites Förderband |
| 3 dritte Teigschicht | 16 zweite Teiglage |
| 5 Bereich der Oberfläche senkrecht zur | 17 Walzeinrichtung |
| Betrachtungsebene | 18 dritte Teiglage |
| 6 Schnittkante | 19 drittes Förderband |
| 7 Innenfläche der dritten Teichschicht | 20 viertes Förderband |
| 10 erste Teiglage | 21 Kantenschneideinrichtung |
| 11 erstes Förderband | 22 Teigstücke des Teigverbunds |
| 12 Dekorwalze | 23 Leitelemente |
| 13 Messer | 24 Transporteinrichtung zur Rückführung |
| 14 Einschnitt | |

## Patentansprüche

1. Verfahren zur Herstellung einer Backware mit den Schritten:
1. Herstellen eines ersten Teigs für eine erste Teigschicht (1), Herstellen eines zweiten Teigs für eine zweite Teigschicht (2), wobei erster und zweiter Teig unterschiedliche Färbungen aufweisen;
2. Auswalzen des ersten Teigs auf eine erste Dicke und Erzeugen von beabstandeten, die erste Dicke zumindest anteilig überspannenden Einschnitten (14), anschließendes Strecken des ersten Teigs zur Dehnung oder Öffnung der Einschnitte (14) zur Herstellung einer ersten Teiglage (10), die gedehnte oder geöffnete Einschnitte (14o) aufweist;
3. Auswalzen des zweiten Teigs auf eine zweite Dicke zur Herstellung einer zweiten Teiglage (16);
4. Anordnen der ersten Teiglage (10), die gedehnte oder geöffnete Einschnitte (14o) aufweist, angrenzend an die zweite Teiglage (16);
5. Auswalzen der Anordnung, die die erste und die angrenzende zweite Teiglage (10, 16) aufweist, zur Herstellung eines flächigen Teigverbunds einheitlicher Dicke mit erster und zweiter Teigschicht (1, 2), der eine kontinuierliche Oberfläche aufweist, in der aus den gedehnten oder geöffneten Einschnitten (14o) gebildete Ausnehmungen in der ersten Teigschicht (1) durch die zweite Teigschicht (2) ausgefüllt sind.

2. Verfahren nach Anspruch 1, **gekennzeichnet durch** den Schritt des Herstellen eines dritten Teigs mit einer zum zweiten Teig unterschiedlichen Färbung für eine dritte Teigschicht, des Auswalzens eines dritten Teigs auf eine dritte Dicke zur Herstellung einer dritten Teiglage (18) und des Anordnens der dritten Teiglage (18) gegenüber der ersten Teiglage (10) an der zweiten Teiglage (16) vor Schritt 5.

3. Verfahren nach einem der voranstehenden Ansprüche, **dadurch gekennzeichnet, dass** die Einschnitte (14) die erste Dicke zu 50 bis 100% überspannen.

4. Verfahren nach einem der voranstehenden Ansprüche, **dadurch gekennzeichnet, dass** das Anordnen der ersten Teiglage (10), die gedehnte oder geöffnete Einschnitte (14o) aufweist, angrenzend an die zweite Teiglage (16) durch Auflegen der zweiten Teiglage (16) auf die erste Teiglage (10), die gedehnte oder geöffnete Einschnitte (14o) aufweist und auf einem Förderband (15) aufliegt, erfolgt.

5. Verfahren nach einem der voranstehenden Ansprüche, **gekennzeichnet durch** den Schritt des Ausschneidens von Stücken aus dem Teigverbund.

6. Verfahren nach einem der voranstehenden Ansprüche, **gekennzeichnet durch** den Schritt des Abschneidens von Teigstücken (22) entlang der Längskanten des Teigverbunds.

7. Verfahren nach einem der voranstehenden Ansprüche, **gekennzeichnet durch** den Schritt des Wickelns von Stücken, die aus dem Teigverbund geschnitten sind.

8. Verfahren nach einem der voranstehenden Ansprüche, **gekennzeichnet durch** den Schritt des Anordnen von Teigstücken (22) des Teigverbunds auf der zweiten Teiglage (16) und/oder zwischen der zweiten (15) und der dritten Teiglage (18) vor dem Auswalzen.

9. Verfahren nach einem der voranstehenden Ansprüche, **dadurch gekennzeichnet, dass** die Einschnitte (14), die in der ersten Teiglage (10) erzeugt werden, 1 bis 3 cm lang sind und parallel und unabhängig senkrecht zur Walzrichtung und/oder zur Förderrichtung eines Förderbands (11, 15) jeweils 0,5 bis 2 cm voneinander beabstandet sind.

10. Verfahren nach einem der voranstehenden Ansprüche, **dadurch gekennzeichnet, dass** der erste Teig ein homogener, treibmittelhaltiger Teig mit einer Festigkeit ist, die ein Teig aus 35 bis 43 Gew.-% Wasser, 10 bis 25 Gew.-% Butter, 3,2 bis 7 Gew.-% Hefe, 0,8 bis 1,6 Gew.-% Salz auf 100 Gew.-% Weizenmehl Typ 550 bei 0 bis 10 °C ohne Lagerung oder nach Lagerung bei 1 bis 4 °C für 3 bis 6 h aufweist, und der zweite Teig und/oder der dritte Teig jeweils unabhängig voneinander nicht tourierter Hefeteig, Plunderteig oder Blätterteig ist.

11. Verfahren nach einem der voranstehenden Ansprüche, **dadurch gekennzeichnet, dass** das Anordnen der ersten Teiglage (10), die gedehnte oder geöffnete Einschnitte (14o) aufweist, angrenzend an die zweite Teiglage (16) und das Auswalzen der Anordnung, die die erste und die angrenzende zweite Teiglage (10, 16) aufweist, optional das Anordnen einer dritten Teiglage (18) gegenüber der ersten Teiglage (10) an der zweiten Teiglage (16) vor dem Auswalzen, kontinuierlich erfolgen.

12. Verfahren nach einem der voranstehenden Ansprüche mit einer Vorrichtung mit einer oberhalb eines ersten Förderbands (11) angeordneten Schneideinrichtung (12), die Messer (13) zur Erzeugung von diskontinuierlichen Einschnitten (14) in einer auf dem ersten Förderband (11) angeordneten ausgewalzten ersten Teiglage (10) aufweist, einer anschließenden Streckeinrichtung, die ein anschließendes, schneller als das erste Förderband (11) laufendes zweites Förderband (15) ist, zur Streckung der ersten Teiglage (10), einem dritten Förderband (19), das oberhalb eines zweiten Förderbands (15) endet, zum Anordnen einer ausgewalzten zweiten Teiglage (16) unmittelbar angrenzend an die mit gestreckten Einschnitten (14o) versehene erste Teiglage (10) und mit einer anschließenden Walzeinrichtung (17) zum Walzen der Anordnung zur Herstellung eines Teigverbunds.

13. Verfahren nach Anspruch 12, **gekennzeichnet durch** eine anschließend an die Walzeinrichtung (17) angeordnete Kantenschneideinrichtung (21) und eine Transporteinrichtung (24) zur Rückführung von Teigstücken (22) abgeschnittener Kanten des Teigverbunds zu einem Abschnitt eines Förderbands (15) vor der Walzeinrichtung (17).

14. Verfahren nach Anspruch 12 oder 13, **dadurch gekennzeichnet, dass** die Messer (13) eingerichtet sind, diskontinuierliche Einschnitte (14) zu erzeugen, die die Dicke der ersten Teiglage (10) zu zumindest 50% überspannen.

15. Verfahren nach einem der Ansprüche 12 bis 14, **gekennzeichnet durch** ein viertes Förderband (20) zum Anordnen einer dritten Teiglage (18) an einem Abschnitt eines Förderbands (15) vor der Walzeinrichtung (17).

## Claims

1. Process for producing bakery produce with the steps of:
1. producing a first dough for a first dough layer (1), producing a second dough for a second dough layer (2), wherein the first and the second doughs have different colouring:
2. rolling out of the first dough to a first thickness and generating incisions (14) that at least in part span the first thickness, subsequent stretching of the first dough for dilating or opening of the incisions (14) for producing a first dough layer (10) having dilated or opened incisions (14o);
3. rolling out of the first dough to a second thickness for producing a second dough layer (16);
4. arranging the first dough layer (10) that has dilated or opened incisions (14o), adjacent to the second dough layer (16);
5. rolling out of the arrangement comprising the first and the adjacent second dough layers (10, 16) for producing a flat dough composite of uniform thickness having a first and a second dough layer (1, 2) which has a continuous surface in which recesses formed of the dilated or opened incisions in the first dough layer (1) are filled by the second dough layer (2).

2. Process according to claim 1, **characterized by** the step of producing a third dough having a colouring different to the second dough for a third dough layer, rolling out of the third dough to a third thickness for producing a third dough layer (18) and arranging the third dough layer (18) opposite of the first dough layer (10) to the second dough layer (16) prior to step 5.

3. Process according to one of the preceding claims, **characterized in that** the incisions (14) span the first thickness to 50 to 100%.

4. Process according to one of the preceding claims, **characterized in that** arranging of the first dough layer (10) which has dilated or opened incisions (14o) occurs adjacent to the second dough layer (16) by layering of the second dough layer (16) onto the first dough layer (10) which has dilated or opened incisions (14o) and lies on a conveyor belt (15).

5. Process according to one of the preceding claims, **characterized by** the step of cutting out of pieces from the dough composite.

6. Process according to one of the preceding claims, **characterized by** the step of cutting off of dough pieces (22) along the longitudinal edges of the dough composite.

7. Process according to one of the preceding claims, **characterized by** the step of reeling of pieces that are cut out of the dough composite.

8. Process according to one of the preceding claims, **characterized by** the step of arranging of dough pieces (22) of the dough composite onto the second dough layer (16) and/or between the second (15) and the third dough layer (18) prior to rolling out.

9. Process according to one of the preceding claims, **characterized in that** the incisions (14) which are generated in the first dough layer (10) are 1 to 3 cm long and parallel and independently perpendicular to the rolling direction and/or to the conveying direction of a conveyor belt (11, 15) are spaced 0.5 to 2 cm from one another.

10. Process according to one of the preceding claims, **characterized in that** the first dough is a homogenous dough containing a leavening agent and having a firmness of a dough of 35 to 43 wt.-% water, 10 to 25 wt.-% butter, 3.2 to 7 wt.-% yeast, 0.8 to 1.6 wt.-% salt for 100 wt.-% wheat flour type 550 at 0 to 10 °C without storage or after storage at 1 to 4 °C for 3 to 6 h, and the second dough and/or the third dough each independent from one another is non-laminated yeast dough, puff pastry or flaky pastry.

11. Process according to one of the preceding claims, **characterized in that** arranging of the first dough layer (10) that has dilated or opened incisions (14o), adjacent to the second dough layer (16) and rolling out of the arrangement having the first and the adjacent second dough layers (10, 16), optionally arranging of a third dough layer (18) opposite of the first dough layer (10) on the second dough layer (16) prior to rolling out, occur continuously.

12. Process according to one of the preceding claims with a device having a cutting device (12) arranged above a first conveyor belt (11), the cutting device having knives (13) for generating discontinuous incisions (14) in a first rolled out dough layer (10) arranged on the first conveyor belt (11), a subsequent stretching device which is a subsequent a second conveyor belt (15) running faster than the first conveyor belt (11), for stretching the first dough layer (10), a third conveyer belt that ends above a second conveyor belt (15) for arranging a rolled-out second dough layer (16) immediately adjacent to the first dough layer (10) provided with the dilated incisions (14o), and with a subsequent rolling device (17) for rolling the arrangement for producing a dough composite.

13. Process according to claim 12, **characterized by** an edge cutting device (21) arranged subsequent to the rolling device (17) and a transportation device (24) for redirecting of dough pieces (22) of cut-off egdes of the dough composite to a section of a conveyor belt (15) prior to the rolling device (17).

14. Process according to claim 12 or 13, **characterized in that** the knives (13) are arranged to generate discontinuous incisions (14) which span the thickness of the first dough layer (10) to at least 50%.

15. Process according to one of claims 12 to 14, **characterized by** a fourth conveyor belt (20) for arranging a third dough layer (18) in a section of a conveyor belt (15) prior to the rolling device (17).

## Revendications

1. Procédé de fabrication d'un produit cuit au four avec les étapes suivantes:
1. Préparer une première pâte pour une première couche de pâte (1), préparer une deuxième pâte pour une deuxième couche de pâte (2), la première pâte et la deuxième pâte étant de coloration différente;
2. Dérouler la première pâte sur une première épaisseur et
produire des incisions espacées (14) recouvrant au moins partiellement la première épaisseur, puis étirer la première pâte pour étirer ou ouvrir les incisions (14) afin de produire une première feuille de pâte (10) qui présente des incisions étirées ou bien ouvertes (14o);
3. Dérouler la deuxième pâte jusqu'à une deuxième épaisseur pour produire une deuxième feuille de pâte (16);
4. Disposer la première feuille de pâte (10) avec des incisions étirées ou ouvertes (14o) adjacentes à la deuxième feuille de pâte (16);
5. Dérouler l'ensemble comprenant la première feuille de pâte et la deuxième feuille de pâte adjacentes (10, 16), pour produire un composite de pâte plat d'épaisseur uniforme présentant une première couche de pâte et une deuxième couche de pâte (1, 2) de surface continue, dans laquelle se trouvent des incisions étirées (14o) formées à partir des incisions (14a) étirées ou bien ouvertes, dans la première couche de pâte (1) à travers la deuxième couche de pâte (2).

2. Procédé selon la revendication 1, **caractérisé par** l'étape consistant à produire une troisième pâte présentant une troisième pâte différente de la deuxième pâte pour obtenir une troisième couche de pâte, à rouler une troisième pâte pour obtenir une troisième épaisseur et ainsi produire une troisième feuille de pâte (18), et à disposer la troisième feuille de pâte (18) en regard de la première feuille de pâte (10) sur la deuxième feuille de pâte (16) avant l'étape 5.

3. Procédé selon l'une des revendications précédentes, **caractérisé en ce que** les incisions (14) s'étendent sur de 50 à 100% de la première épaisseur.

4. Procédé selon l'une des revendications précédentes, **caractérisé en ce que** la disposition de la première feuille de pâte (10) présentant des incisions étirées ou ouvertes (140), de manière adjacente à la deuxième feuille de pâte (16) en plaçant la deuxième feuille de pâte (16) sur la première feuille de pâte (10), laquelle présente des incisions étirées ou bien ouvertes (140a), reposant sur une bande transporteuse (15).

5. Procédé selon l'une des revendications précédentes, **caractérisé par** l'étape consistant à découper des morceaux dans le composite de pâte.

6. Procédé selon l'une des revendications précédentes, **caractérisé par** l'étape consistant à découper des morceaux de pâte (22) le long des bords longitudinaux du composite de pâte.

7. Procédé selon l'une des revendications précédentes, **caractérisé par** l'étape consistant à enrouler des morceaux découpés dans le composite de pâte.

8. Procédé selon l'une des revendications précédentes, **caractérisé par** l'étape consistant à disposer les morceaux de pâtes (22) du composite de pâte sur la deuxième feuille de pâte (16) et/ou entre les deuxième (15) et troisième (18) feuilles de pâte (18) avant de les dérouler.

9. Procédé selon l'une des revendications précédentes, **caractérisé en ce que** les incisions (14) réalisées dans la première feuille de pâte (10) ont une longueur de 1 à 3 cm et sont chacune parallèles et indépendantes perpendiculairement à la direction de laminage et/ou espacées de 0,5 à 2 cm par rapport à la direction de transport d'une bande transporteuse (11, 15).

10. Procédé selon l'une des revendications précédentes, **caractérisé en ce que** la première pâte est une pâte homogène, contenant un agent d'expansion d'une certaine solidité, comprenant une pâte de 35 à 43% en poids d'eau, 10 à 25% en poids de beurre, 3,2 à 7% en poids de levure, 0,8 à 1,6% en poids de sel pour 100% en poids de farine de blé type 550 de 0 à 10°C sans stockage ou après stockage à 1 à 4°C pendant 3 à 6 heures, et la deuxième pâte et/ou la troisième pâte sont chacun indépendamment une pâte à levure non levée, une pâte danoise ou une pâte feuilletée.

11. Procédé selon l'une des revendications précédentes, **caractérisé en ce que** la disposition de la première feuille de pâte (10) présentant des incisions étirées ou ouvertes (140), de manière adjacente à la deuxième feuille de pâte (16), avant de dérouler l'ensemble comprenant les première et deuxième feuilles de pâte adjacentes (10, 16), en plaçant éventuellement une troisième feuille de pâte (18) en regard de la première feuille de pâte (10) sur la deuxième feuille de pâte (16) avant laminage en continu.

12. Procédé selon l'une des revendications précédentes, avec un dispositif comportant un dispositif de coupe (12) disposé au-dessus d'une première bande transporteuse (11), des couteaux (13) servant à produire des incisions discontinues (14) dans une première feuille de pâte (10) déroulé et disposé sur la première bande transporteuse (11), un dispositif d'étirement en aval, qui est une deuxième bande transporteuse (15) plus rapide que la première bande transporteuse (11), pour étirer la première feuille de pâte (10), une troisième bande transporteuse (19) se terminant au-dessus d'une deuxième bande transporteuse (15), pour placer une deuxième feuille de pâte déroulée (16) immédiatement adjacente à la première feuille de pâte (10) pourvue d'incisions étirées (14o) et de moyens de laminage en aval (17) pour enrouler l'ensemble afin de former un composite de pâte.

13. Procédé selon la revendication 12, **caractérisé par** un dispositif de découpe de bord (21) disposé en aval sur le dispositif de laminage (17) et un dispositif transporteur (24) pour ramener les pâtes (22) des bords découpés du composite de pâte dans une section d'une bande transporteuse (15) située en amont du dispositif de laminage (17).

14. Procédé selon les revendications 12 ou 13, **caractérisé en ce que** les couteaux (13) sont adaptés pour produire des coupes discontinues (14) qui couvrent au moins 50% de l'épaisseur de la première feuille de pâte (10).

15. Procédé selon l'une des revendications 12 à 14, **caractérisé par** une quatrième bande transporteuse (20) pour disposer une troisième feuille de pâte (18) sur une section d'une bande transporteuse (15) en amont du dispositif de laminage (17).
